# EUROPÄISCHE PATENTSCHRIFT

(11) **EP 0 636 451 B1**
(45) Veröffentlichungstag und Bekanntmachung des Hinweises auf die Patenterteilung: **24.04.1996**
(21) Anmeldenummer: 94109695.0
(22) Anmeldetag: 23.06.1994
(51) Int. Cl.: B23Q 3/155

(54) **Sicherheitsvorrichtung an einem Regalmagazin**
Safety device for a storage rack
Dispositif de sécurité pour étagère

(30) Priorität: 31.07.1993 DE 4325774
(43) Veröffentlichungstag der Anmeldung: 01.02.1995
(73) Patentinhaber: DÖRRIES SCHARMANN GmbH, D-41236 Mönchengladbach (DE)
(72) Erfinder: Brassel, Günter, Dipl.-Ing., D-41366 Schwalmtal (DE)
(74) Vertreter: Rehders, Jochen, Dipl.-Ing.

(56) Entgegenhaltungen:
- EP-A- 0 289 834
- DE-A- 3 618 959
- DE-A- 3 713 868
- DE-A- 4 032 003
- WERKSTATT UND BETRIEB, Bd.124, Nr.3, März 1991, MUNCHEN DE Seite 201 'Werkzeugversorgung und -verwaltung beim Drehen'
- WERKSTATTSTECHNIK, ZEITSCHRIFT FUR INDUSTRIELLE FERTIGUNG, Bd.75, Nr.8, August 1985, BERLIN DE Seite 459 'Mit neuer Baureihe von Bearbeitungszentren Fertigungskosten verringert'

## Beschreibung

Die Erfindung betrifft eine Sicherheitsvorrichtung an einem Regalmagazin für Werkzeuge eines Bearbeitungszentrums.

Regalmagazine mit Magazinböden, an denen eine Vielzahl von Werkzeugen eines Bearbeitungszentrums hängend angeordnet sind, werden alle in oder zusätzlich zu einem Werkzeugmagazin an der Werkzeugmaschine angeordnet, wenn für das Bearbeitungszentrum eine sehr große Anzahl von unterschiedlichen Werkzeugen benötigt wird, die sich in einem werkzeugmaschinennahen Werkzeugmagazin nicht unterbringen lassen. Das Entnehmen und Einsetzen eines Werkzeugs aus dem bzw. in das Regalmagazin erfolgt mittels Transportvorrichtungen, die auch als Werkzeugwechsler gestaltet sein können und dann sowohl das Auswechseln von Werkzeugen in dem Bearbeitungszentrum als auch das Entnehmen und Einsetzen eines Werkzeugs aus dem bzw. in das Regalmagazin vornehmen. Weist das Bearbeitungszentrum ein zusätzliches Werkzeugmagazin auf, befindet sich an dem Bearbeitungszentrum in der Regel ein Werkzeugwechsler, während die Transportvorrichtung nur den Hin- und Hertransport von Werkzeugen zwischen dem Regalmagazin und dem Werkzeugmagazin vornimmt.

Ein Regalmagazin dieser Art mit einer Transportvorrichtung ist in der DE-A1-37 13 868 derselben Anmelderin beschrieben.

Um abgenutzte oder beschädigte Werkzeuge tauschen zu können, besteht eine Zugriffsmöglichkeit zu dem Regalmagazin für eine Bedienperson, die beschädigte bzw. abgenutzte Werkzeuge entnimmt und gegen neue bzw. überholte Werkzeuge austauscht. Während dieses Werkzeugtauschs besteht die Gefahr, daß die Transportvorrichtung in den Bereich des Regalmagazins gelangt, wo gerade ein Werkzeugtausch vorgenommen wird. Dies bedeutet, eine große Gefährdung der Bedienperson, so daß die Transportvorrichtung zum Wechseltausch stillgesetzt werden muß, was dazu führen kann, daß auch das Bearbeitungszentrum stillstehen muß, wenn ein Werkzeugwechsel vorgenommen werden soll und die Transportvorrichtung dafür nicht zur Verfügung steht. Es liegt auf der Hand, daß dies zu einer schlechten Ausnutzung des Bearbeitungszentrums führt.

In der DE-A1-40 32 003 ist des weiteren eine Werkzeugversorgungseinrichtung einer Werkzeugmaschine beschrieben, die aus einem an der Werkzeugmaschine angeordneten Werkzeugmagazin und einer Werkzeugwechseleinrichtung zum Wechseln der Werkzeuge zwischen dem Werkzeugmagazin und der Werkzeugmaschine besteht, wobei das Werkzeugmagazin im Zugriffsbereich der Werkzeugwechseleinrichtung eine Werkzeugschleuse zum Eingeben von mit Werkzeugen des Werkzeugmagazins auszutauschenden Werkzeugen hat.

Der Erfindung liegt daher die Aufgabe zugrunde, eine Sicherheitsvorrichtung an einem Regalmagazin für Werkzeuge eines Bearbeitungszentrums zu schaffen, mit der ein Werkzeugtausch während der Hauptzeit möglich ist, und mit der jegliche Gefährdung von Bedienpersonen beim Werkzeugtausch ausgeschlossen ist.

Ausgehend von dieser Aufgabenstellung wird eine Sicherheitsvorrichtung vorgeschlagen, die aus wenigstens einem Werkzeugträger im Regalmagazin, wenigstens einer auf einer Seite des Regalmagazins angeordneten Transportvorrichtung zum Entnehmen und Einsetzen eines Werkzeugs aus dem bzw. in den Werkzeugträger und zum Verbringen des Werkzeugs an eine andere Aufbewahrungsstelle des Regalmagazins oder zum Bearbeitungszentrum, wenigstens einer auf der der Transportvorrichtung gegenüberliegenden Seite des Regalmagazins befindliche Zugriffsöffnung zum Tauschen von Werkzeugen besteht und erfindungsgemäß eine bewegliche Sicherheitsdeckung, die in der einen Stellung das Tauschen von Werkzeugen zuläßt und den Zugriff zu diesen Werkzeugen für die Transportvorrichtung versperrt und die in der anderen Stellung den Zugriff zum Tauschen von Werkzeugen versperrt und den Zugriff zu diesen Werkzeugen für die Transportvorrichtung zuläßt, aufweist.

Die Erfindung geht von der Überlegung aus, daß der Werkzeugtausch im Bereich einer ebenerdigen Ebene des Regalmagazins vorgenommen wird und das Regalmagazin zu diesem Zweck auf der einen Seite eine Zugriffsöffnung für die Transportvorrichtung und auf der anderen Seite eine Zugriffsöffnung zum Tauschen von Werkzeugen aufweist und daß diese Zugriffsöffnungen durch die Sicherheitsvorrichtung wechselweise verschlossen werden müssen, um einerseits in der Stellung zum Tauschen von Werkzeugen den Zugriff zu diesen Werkzeugen für die Transportvorrichtung zu versperren und andererseits in der Stellung zum Entnehmen und Einsetzen eines Werkzeugs aus dem bzw. in den Werkzeugträger durch die Transportvorrichtung den Zugriff von der Seite zu sperren, von der das Tauschen von Werkzeugen vorgenommen wird.

Diese Sicherheitsvorrichtung kann aus einer in der einen Stellung die Zugriffsöffnung auf der Transportvorrichtungsseite und in der anderen Stellung die Zugriffsöffnung der Werkzeugtauschseite verschließenden Tür bestehen, z. B. einer einflügeligen oder zweiflügeligen Schwenktür, die sich jeweils in eine die Zugriffsöffnung auf der Transportvorrichtungsseite und die Zugriffsöffnung auf der Werkzeugtauschseite verschließende Stellung schwenken läßt.

Da je nach räumlichen Verhältnissen Zwischenstellungen gegeben sein können, in denen eine Durchgriffsmöglichkeit von der Zugriffsöffnung auf der Werkzeugtauschseite zur Zugriffsöffnung auf der Transportvorrichtungsseite besteht, kann eine zusätzliche, entfernbare Durchgriffssicherung auf einer der Seiten des Regalmagazins angeordnet sein, die ein Durchgreifen in teilweise geöffneter oder geschlossener Stellung der Sicherheitsabdeckung verhindert.

Um zu vermeiden, daß die zum Manipulieren schwerer Werkzeuge eingerichtete Transportvorrichtung die Sicherheitsabdeckung oder Durchgriffssicherung beschädigt, wenn sie bei geschlossener Sicherheitsabdeckung bzw. Durchgriffssicherung in den Bereich der Zugriffsöffnung verfahren wird und zum Entnehmen oder Einsetzen eines Werkzeuges aus dem bzw. in den Werkzeugträger angesteuert wird, kann die Sicherheitsabdeckung eine mit der Steuerung der Transportvorrichtung verbundene Verriegelung aufweisen, die beim Entriegeln durch die Bedienungsperson den Zugriff der Transportvorrichtung nur zum jeweiligen Werkzeugträger sperrt, während der Zugriff zu den anderen Aufbewahrungsstellen des Regalmagazins für die Transportvorrichtung frei bleibt. Auf diese Weise wird erreicht, daß ein Werkzeugtausch während der Hauptzeiten des Bearbeitungszentrums möglich ist, da die Transportvorrichtung weiterhin Werkzeuge aus dem Regalmagazin entnehmen und in das Regalmagazin einsetzen kann. Nur wenn ein Werkzeug aus dem Werkzeugträger für einen Bearbeitungsvorgang im Bearbeitungszentrum benötigt wird und gerade ein Werkzeugtausch vorgenommen wird, ist eine gewisse Wartezeit gegeben. Diese Wartezeit läßt sich jedoch vermeiden, wenn der Werkzeugträger ausschließlich für den Werkzeugtausch benutzt wird, während die für die Bearbeitungsvorgänge im Bearbeitungszentrum benötigten Werkzeuge ausschließlich an anderen Stellen des Regalmagazins aufbewahrt werden.

Eine besonders vorteilhafte Ausführungsform der Sicherheitsabdeckung ist gegeben, wenn diese aus wenigstens einem die Zugriffsöffnung für die Transportvorrichtung oder die Zugriffsöffnung für den Werkzeugtausch wechselweise verschließenden Rolladen besteht, der sich in einer Querbewegung oder einer Auf- und Abbewegung von der einen in die andere Stellung bewegen läßt.

Vorzugsweise kann der Werkzeugträger aus einem Wagen mit einer Aufnahmeplatte für wenigstens ein Werkzeug bestehen, wobei sich die Durchgriffssicherung in besonders einfacher Weise aus einer auf der Seite der Zugriffsöffnung für den Werkzeugtausch angeordneten Blechverkleidung gestalten läßt.

Zusätzlich zur Verriegelung an der Sicherheitsabdeckung oder anstelle dieser Verriegelung läßt sich eine ggf. ebenfalls mit der Steuerung der Transportvorrichtung verbundene, am Wagen angreifende, nur bei vollständig geschlossener Zugriffsöffnung für die Transportvorrichtung lösbarer Verriegelung anordnen, so daß sich ein Wagen zum Werkzeugtausch nur dann herausfahren läßt, wenn die Zugriffsöffnung für die Transportvorrichtung vollständig geschlossen ist. Die gegenseitige Verriegelung des Wagens und der Sicherheitsabdeckung kann rein mechanisch oder elektromechanisch erfolgen.

Vorzugsweise kann das Regalmagazin eine erste, ebenerdige Ebene, die mehrere Wagen aufnimmt und darüber angeordnete weitere Ebenen mit fest angeordneten Aufnahmeplatten für Werkzeuge aufweisen.

Derartige Regalmagazine lassen sich vorteilhaft parallel zueinander anordnen, so daß sie zwischen sich eine Gasse für die Transportvorrichtung bilden. Auf diese Weise lassen sich raumsparend eine Vielzahl von Werkzeugen magazinieren, so daß alle Werkzeuge für die Bearbeitung komplizierter Teile am Bearbeitungszentrum zur Verfügung stehen.

Die Erfindung wird nachstehend anhand eines in der Zeichnung dargestellten Ausführungsbeispiels des näheren erläutert. In der Zeichnung zeigen:

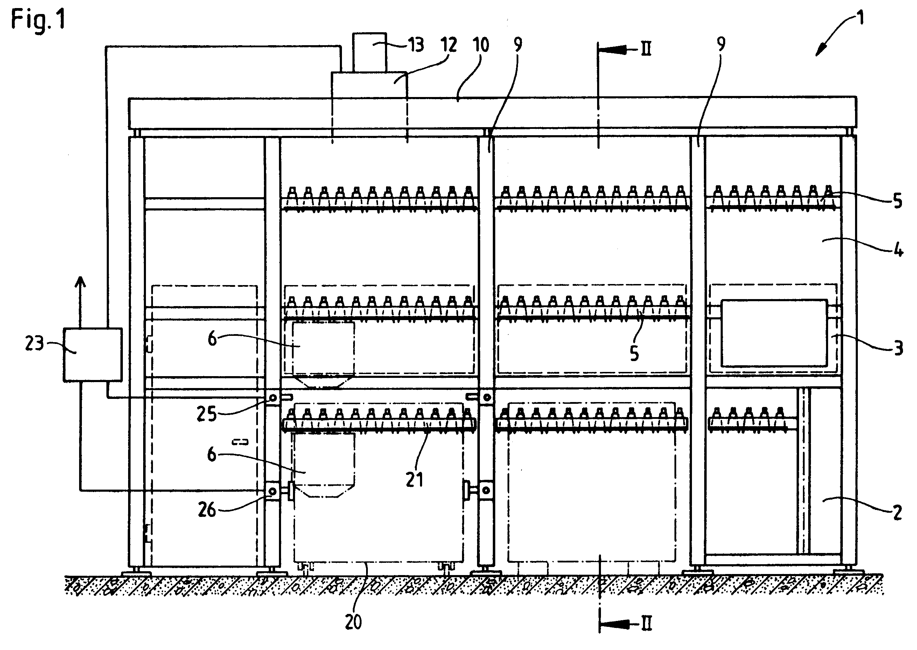

- Fig. 1: eine Seitenansicht eines Regalmagazins und
- Fig. 2: einen Querschnitt entlang der Linie II - II von Fig. 1.

Ein erstes Regalmagazin 1, in dem in einer ebenerdigen Ebene 2, einer zweiten Ebene 3 und einer dritten Ebene 4 Magazinböden 5 als Aufnahmeplatten für Werkzeuge 6 angeordnet sind, ist parallel zu einem gleich aufgebauten zweiten Regalmagazin 7 angeordnet, so daß zwischen dem ersten Regalmagazin 1 und dem zweiten Regalmagazin 7 eine Gasse 8 gebildet wird. Die Regalmagazine 1, 7 bestehen aus einer Reihe paralleler Pfosten 9, die durch die Magazinböden 5 miteinander verbunden sind und eine ausreichende Tragfähigkeit für eine Mehrzahl von in die Magazinböden 5 senkrecht eingehängten Werkzeugen 6 aufweisen.

Oberhalb der Regalmagazine 1, 7 ist ein Laufschienenpaar 10 angeordnet, das zur Führung von Laufrollen 11 an einer Laufkatze 12 dient. An der Laufkatze 12 ist eine senkrechte Teleskopführung 13 angeordnet, die am unteren Ende einen Kopf 14 und Schwenkarme 15, 16 aufweist. Am freien Ende des Schwenkarms 16 ist ein Werkzeuggreifer 17 angeordnet. Die aus den Laufrollen 11, der Laufkatze 12, der Teleskopführung 13, dem Kopf 14, den Schwenkarmen 15, 16 und dem Werkzeuggreifer 17 gebildete Transportvorrichtung ist ähnlich der in der deutschen Offenlegungsschrift 37 13 868 derselben Anmelderin beschriebenen Transportvorrichtung aufgebaut. Mittels dieser Transportvorrichtung 11 bis 17 lassen sich Werkzeuge 6 aus jeder Ebene 2, 3, 4 der Regalmagazine 1, 7 entnehmen bzw. in sie einsetzen und in den Bereich eines Bearbeitungszentrums transportieren. Zu diesem Zweck ist die Transportvorrichtung 11 bis 17 mit einer Steuerung 23 verbunden, die mit der Steuerung des Bearbeitungszentrum gekoppelt ist oder einen Teil davon darstellt. Bei einer anderen, nicht dargestellten Ausführungsform kann die Transportvorrichtung an einer oberen und einer unteren Schiene geführt sein, während der Kopf als Schlitten an einer senkrechten Achse verfahrbar ist. Diese Art der Führung ist günstiger, wenn sehr schwere Werkzeuge zu transportieren sind.

In der ebenerdige Ebene 2 wenigstens des Regalmagazins 1 sind Werkzeugträger in Form von Wagen 20 angeordnet, die sich zum Zwecke des Werkzeugtauschs aus dem Bereich des Regalmagazins 1 herausfahren lassen.

Jeder Wagen 20 weist eine Aufnahmeplatte 21 für mehrere Werkzeuge 6 auf, die ähnlich wie die Magazinböden 5 der Regalmagazine 1, 7 gestaltet sind. Von der Gasse 8 zwischen den Regalmagazinen 1, 7 aus ist der Wagen 20 über eine Zugriffsöffnung 18 für die Transportvorrichtung 11 bis 17 erreichbar, während sich auf der Außenseite des Regelmagazins 1 eine Zugriffsöffnung 19 für den Werkzeugtausch befindet.

Die Sicherheitsvorrichtung besteht im dargestellten Beispiel aus einem Rolladen 24, der in der aufgezogenen Stellung die Zugriffsöffnung 18 für die Transportvorrichtung 11, 17 verschließt, während die Zugriffsöffnung 19 für den Werkzeugtausch geöffnet ist. Da der Wagen 20 an seiner der Zugriffsöffnung 19 zugewandten Seite eine Blechverkleidung 22 aufweist, ist hierdurch eine Durchgriffssicherung gegeben, die verhindert, daß die Bedienperson zwischen die Werkzeuge 6 greift und durch die Transportvorrichtung 11 bis 17 gefährdet wird, wenn der Rolladen 24 die Zugriffsöffnung 18 noch nicht vollständig verschlossen hat.

Prinzipiell bedeutet dies, daß der Bereich, in dem sich der Wagen 20 befindet, grundsätzlich an drei Seiten verschlossen sein muß, so daß sich die Durchgriffssicherung auch dadurch erstellen läßt, daß der Rolladen 24 so lang ist, daß er in jeder Stellung drei Seiten des Bereichs, in dem der Wagen 20 steht, abdeckt.

Im dargestellten Beispiel wird der Rolladen 24 mittels eines Handgriffs 27 auf- und abbewegt, jedoch ist es auch möglich, den Rolladen von links nach rechts oder von rechts nach links quer zu bewegen. Des weiteren ist es möglich, den Rolladen, wenn er querbeweglich ist, geteilt auszuführen und die beiden Teile von den Seiten oder von oben und unten her zur Mitte zusammenzuführen.

Schließlich ist es auch noch möglich, statt eines Rolladens Schwenktüren vorzusehen, die sich um eine waagerechte oder um eine senkrechte Achse vor die Zugriffsöffnungen 18 bzw. 19 bewegen lassen.

Mit der Steuerung 23 ist eine Rolladenverriegelung 25 und eine Wagenverriegelung 26 verbunden. Die Rolladenverriegelung 25 bewirkt, daß der Rolladen 24 in der jeweiligen Endstellung verriegelt ist, wobei die Verbindung zur Steuerung 23 bewirkt, daß die Transportvorrichtung 11 bis 17 nicht in den Bereich der Zugriffsöffnung 18 fahren kann, wenn diese Zugriffsöffnung 18 durch den Rolladen 24 verschlossen ist.

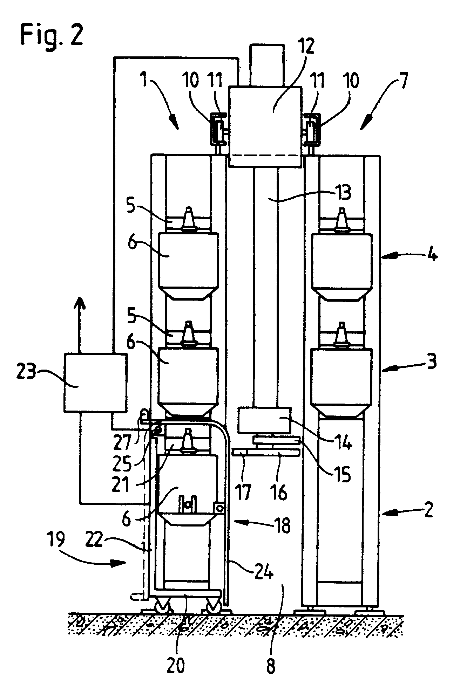

In dieser Stellung ist auch die Wagenverriegelung 26, die ebenfalls mit der Steuerung 23 verbunden ist, entriegelt, so daß sich der Wagen 20 für einen Werkzeugtausch aus dem Bereich des Regalmagazins 1 herausfahren läßt. Die Wagenverriegelung 26 ist so eingerichtet, daß der Rolladen 24 in der in Fig. 2 dargestellten Stellung, in der er die Zugriffsöffnung 18 verschließt, so lange verriegelt bleibt, solange sich kein Wagen 20 in diesem Bereich des Regalmagazins 1 befindet.

Die Wagenverriegelung 26 kann auch mechanisch mit der Rolladenverriegelung 25 gekoppelt sein, so daS eine elektrische Verbindung zur Steuerung 23 unnötig ist.

Nachdem ein Werkzeugtausch vorgenommen wurde, wird der Wagen 20 wieder in den Bereich des Regalmagazins 1 gefahren, der Rolladen 24 wird entriegelt, während die Wagenverriegelung 26 verriegelt wird, so daß sich der Rolladen 24 in die gestrichelte Stellung bringen läßt, in der die Zugriffsöffnung 19 verschlossen und die Zugriffsöffnung 18 geöffnet ist. In dieser Stellung wird die Rolladenverriegelung 25 erneut verriegelt und gleichzeitig ein Signal an die Steuerung 23 gegeben, die die Transportvorrichtung 11 bis 17 auch für den Bereich der Zugriffsöffnung 18 freigibt.

Mit der erfindungsmäßigen Sicherheitsvorrichtung ist somit ein hauptzeitparalleles Tauschen von Werkzeugen möglich, ohne daß damit eine Gefährdung des Bedienpersonals verbunden ist.

## Patentansprüche

1. Sicherheitsvorrichtung an einem Regalmagazin für Werkzeuge eines Bearbeitungszentrums mit wenigstens einem Werkzeugträger (20) im Regalmagazin (1, 7), wenigstens einer auf einer Seite des Regalmagazins (1, 7) angeordneten Transportvorrichtung (11 bis 17) zum Entnehmen und Einsetzen eines Werkzeugs (6) aus dem bzw. in den Werkzeugträger (20) und zum Verbringen des Werkzeugs (6) an eine andere Aufbewahrungsstelle des Regalmagazins (1, 7) oder zum Bearbeitungszentrum, wenigstens einer auf der der Transportvorrichtung (11 bis 17) gegenüberliegenden Seite des Regalmagazins (1, 7) befindlichen Zugriffsöffnung (19) zum Tauschen von Werkzeugen (6), **gekennzeichnet durch** eine bewegliche Sicherheitsabdeckung (24), die in der einen Stellung das Tauschen von Werkzeugen (6) zuläßt und den Zugriff zu diesen Werkzeugen (6) für die Transportvorrichtung (11 bis 17) versperrt und die in der anderen Stellung den Zugriff zum Tauschen von Werkzeugen (6) versperrt und den Zugriff zu diesen Werkzeugen (6) für die Transportvorrichtung (11 bis 17) zuläßt.

2. Sicherheitsvorrichtung nach Anspruch 1, **dadurch gekennzeichnet,** daß die Sicherheitsabdeckung (24) aus einer in der einen Stellung der Zugriffsöffnung (19) auf der Transportvorrichtungsseite und in der anderen Stellung die Zugriffsöffnung (19) auf der Werkzeugtauschseite verschließenden Tür besteht.

3. Sicherheitsvorrichtung nach Anspruch 2, **dadurch gekennzeichnet,** daß die Tür (8) als einflügelige oder zweiflügelige Schwenktür gestaltet ist.

4. Sicherheitsvorrichtung nach Anspruch 1, 2 oder 3, **dadurch gekennzeichnet,** daß eine zusätzliche, entfernbare Durchgriffssicherung (22) auf einer der Seiten des Regalmagazins (1, 7) angeordnet ist, die ein Durchgreifen in teilweise geöffneter oder geschlossener Stellung der Sicherheitsabdeckung (24) verhindert.

5. Sicherheitsvorrichtung nach einem oder mehreren der Ansprüche 1 bis 4, **gekennzeichnet durch** eine mit einer Steuerung (23) der Transportvorrichtung (11 bis 17) verbundenen Verriegelung (25) an der Sicherheitsabdeckung (24), die beim Entriegeln den Zugriff der Transportvorrichtung (11 bis 17) nur zum jeweiligen Werkzeugträger (20) sperrt.

6. Sicherheitsvorrichtung nach einem oder mehreren der Ansprüche 1 bis 5, **dadurch gekennzeichnet,** daß die Sicherheitsabdeckung aus wenigstens einem die Zugriffsöffnung (18) für die Transportvorrichtung (11 bis 17) oder die Zugriffsöffnung (19) für den Werkzeugtausch wechselweise verschließenden Rolladen (24) besteht.

7. Sicherheitsvorrichtung nach einem oder mehreren der Ansprüche 1 bis 6, **dadurch gekennzeichnet,** daß der Werkzeugträger aus einem Wagen (20) mit einer Aufnahmeplatte (21) für wenigstens ein Werkzeug (6) besteht.

8. Sicherheitsvorrichtung nach Anspruch 7, **dadurch gekennzeichnet,** daß die Durchgriffssicherung aus einer auf der Seite der Zugriffsöffnung (19) für den Werkzeugtausch angeordneten Blechverkleidung (22) am Wagen (20) besteht.

9. Sicherheitsvorrichtung nach Anspruch 8, **dadurch gekennzeichnet,** daß der Rolladen (24) auf- und abbewegbar ist.

10. Sicherheitsvorrichtung nach einem oder mehreren der Ansprüche 7 bis 9, **gekennzeichnet durch** eine am Wagen (20) angreifende, nur bei vollständig geschlossener Zugriffsöffnung (18) für die Transportvorrichtung (11 bis 17) lösbare Verriegelung (26).

11. Sicherheitsvorrichtung nach Anspruch 10, **dadurch gekennzeichnet,** daß die Verriegelung (26) mit der Steuerung (23) der Transportvorrichtung (11 bis 17) verbunden ist.

12. Sicherheitsvorrichtung nach Anspruch 2, **dadurch gekennzeichnet,** daß das Regalmagazin (1, 7) eine erste, ebenerdige Ebene (2), die mehrere Wagen aufnimmt, und darüber angeordnete weitere Ebenen (3, 4) mit fest angeordneten Aufnahmeplatten (5) für Werkzeuge (6) aufweist.

13. Sicherheitsvorrichtung nach Anspruch 12, **dadurch gekennzeichnet,** daß zwei Regalmagazine (1, 7) parallel zueinander und eine Gasse (8) für die Transportvorrichtung (11 bis 17) bildend angeordnet sind.

## Claims

1. A safety device on a shelf magazine for tools of a machining centre with at least one tool carrier (20) in the shelf magazine (1, 7), at least one transport device (11 to 17) disposed on one side of the shelf magazine (1, 7) for withdrawing and inserting a tool (6) into or from the tool carrier (20) and for bringing the tool (6) to another storage station in the shelf magazine (1, 7) or to the machining centre, and with at least one access aperture (19) for the exchange of tools (6) and disposed on the side of the shelf magazine (1, 7) which is opposite the transport device (11 to 17), characterised by a movable safety covering (24) which in one position allows the interchange of tools (6) and blocks access to these tools (6) for the transport device (11 to 17) and which in the other position blocks access to the interchange of tools (6) and allows access to these tools (6) for the transport device (11 to 17).

2. A safety device according to claim 1, characterised in that the safety covering (24) consists of a door which closes in one position of the access aperture (19) on the transport device side and in the other position occludes the access aperture (19) on the tool exchange side.

3. A safety device according to claim 2, characterised in that the door (8) is constructed as a single-leaf or two-leaf pivotable door.

4. A safety device according to claim 1, 2 or 3, characterised in that an additional removable access aperture (22) is disposed on one of the sides of the shelf magazine (1, 7) which prevents access in a partially opened or closed position of the safety covering (24).

5. A safety device according to one or more of claims 1 to 4, characterised by, connected to a control (23) of the transport device (11 to 17), an interlocking means (25) on the safety covering (24) which, when released, blocks access of the transport device (11 to 17) with the exception of the respective tool carrier (20).

6. A safety device according to one or more of claims 1 to 5, characterised in that the safety covering consists of at least one roller blind (24) which alternately occludes the access aperture (18) for the transport device (11 to 17) or the access aperture (19) for tool exchange.

7. A safety device according to one or more of claims 1 to 6, characterised in that the tool carrier consists of a carriage (20) with a plate (21) for receiving at least one tool (6).

8. A safety device according to claim 7, characterised in that the access safeguard consists of a sheet metal cladding (22) disposed on the carriage (20) on the side of the access aperture (19) for tool exchange.

9. A safety device according to claim 8, characterised in that the roller blind (24) is adapted for upwards and downwards movement.

10. A safety device according to one or more of claims 7 to 9, characterised by an interlocking arrangement (26) engaging the carriage (20) and separable only when there is a completely closed access aperture (18) for the transport device (11 to 17).

11. A safety device according to claim 10, characterised in that the interlocking arrangement (26) is connected to the control (23) of the transport device (11 to 17).

12. A safety device according to claim 2, characterised in that the shelf magazine (1, 7) has a first level plane (2) which accommodates a plurality of carriages and, disposed above it, further planes (3, 4) with rigidly disposed receiving plates (5) for tools (6).

13. A safety device according to claim 12, characterised in that two shelf magazines (1, 7) are disposed parallel with each other and form an alley (8) for the transport device (11 to 17).

## Revendications

1. Dispositif de sécurité sur un magasin à rayonnages pour des outils d'un centre d'usinage comportant au moins un porte-outil (20) dans le magasin à rayonnages (1, 7), au moins un dispositif transporteur (11 à 17) disposé sur un côté du magasin à rayonnages (1, 7) pour prélever un outil (6) du porte-outil (20) ou l'y placer et pour déplacer l'outil (6) à un autre endroit d'emmagasinage due magasin à rayonnages (1, 7) ou au centre d'usinage, au moins une ouverture d'accès (19) se trouvant sur le côté du magasin à rayonnages (1, 7) opposé au dispositif transporteur (11 à 17) pour changer d'outils (6), caractérisé par un couvercle de sécurité (24) mobile qui, dans l'une des positions, permet le changement d'outils (6) et verrouille l'accès à ces outils (6) pour le dispositif transporteur (11 à 17) et, dans l'autre position, verrouille l'accès pour le changement d'outils (6) et permet l'accès à ces outils (6) pour le dispositif transporteur (11 à 17).

2. Dispositif de sécurité selon la revendication 1, caractérisé en ce que le couvercle de sécurité (24) est constitué par une porte qui, dans l'une des positions, ferme l'ouverture d'accès (18) sur le côté dispositif transporteur et, dans l'autre position, ferme l'ouverture d'accès (19) sur le côté changement d'outils.

3. Dispositif de sécurité selon la revendication 2, caractérisé en ce que la porte (8) est réalisée sous forme de porte pivotante à un battant ou à deux battants.

4. Dispositif de sécurité selon la revendication 1, 2 ou 3 charactérisé en ce qu'une sécurité supplémentaire, amovible, d'inhibition de passage (22) est disposée sur l'un des côtés du magasin à rayonnages (1, 7), laquelle empêche le passage en position partiellement ouverte ou partiellement fermée du couvercle de sécurité (24).

5. Dispositif de sécurité selon l'une ou plusieurs des revendications 1 à 4 caractérisé par un verrouillage (25) sur le couvercle de sécurité (24) relié à une commande (23) du dispositif transporteur (11 à 17), lequel verrouillage, lors du déverrouillage, ne bloque l'accès du dispositif transporteur (11 à 17) qu'au porte-outil (20) concerné.

6. Dispositif de sécurité selon l'une ou plusieurs des revendications 1 à 5, caractérisé en ce que le couvercle de sécurité est constitué d'au moins un volet roulant (24) qui ferme alternativement l'ouverture d'accès (18) pour le dispositif transporteur (11 à 17) ou l'ouverture d'accès (19) pour le changement d'outils.

7. Dispositif de sécurité selon l'une ou plusieurs des revendications 1 à 6, caractérisé en ce que le porte-outil est constitué par un chariot (20) avec une plaque de logement (21) pour au moins un outil (6).

8. Dispositif de sécurité selon la revendication 7, caractérisé en ce que la sécurité d'inhibition de passage est constituée par un revêtement de tôle (22) sur le chariot (20) disposé sur le côté de l'ouverture d'accès (19) pour le changement d'outils.

9. Dispositif de sécurité selon la revendication 8, caractérisé en ce que le volet roulant (24) peut monter et descendre.

10. Dispositif de sécurité selon l'une ou plusieurs des revendications 7 à 9, caractérisé par un verrouillage (26) agissant sur le chariot (20) et ne pouvant se déverrouiller que lorsque l'ouverture d'accès (18) pour le dispositif transporteur (11 à 17) est complètement fermée.

11. Dispositif de sécurité selon la revendication 10, caractérisé en ce que le verrouillage (26) est relié à la commande (23) du dispositif transporteur (11 à 17).

12. Dispositif de sécurité selon la revendication 2, caractérisé en ce que le magasin à rayonnages (1, 7) comporte un premier plan (2) au niveau du sol, qui porte plusieurs chariots, et d'autres plans (3, 4) disposés au-dessus munis de plaques de logement (5) montées fixes pour des outils (6).

13. Dispositif de sécurité selon la revendication 12, caractérisé en ce que deux magasins à rayonnages (1, 7) sont disposés parallèles entre eux en formant une voie de passage (8) pour le dispositif transporteur (11 à 17).
